# EUROPEAN PATENT SPECIFICATION

(11) **EP 1 518 873 B1**
(45) Date of publication and mention of the grant of the patent: **10.08.2011**
(21) Application number: 04021487.6
(22) Date of filing: 09.09.2004
(51) Int. Cl.: C08G 18/38, G02B 1/04

(54) **Process of producing plastic lens and plastic lens**
Verfahren zur Herstellung von Kunststofflinsen und Kunststofflinsen
Procédé de fabrication de lentilles en matière synthétique et lentilles synthétiques

(30) Priority: 22.09.2003 JP 2003330285
(43) Date of publication of application: 30.03.2005
(73) Proprietor: HOYA CORPORATION, Shinjuku-ku, Tokyo 161-8525 (JP)
(72) Inventor: Kosaka, Masahisa, Tokyo 161-8525 (JP); Yanagida, Tomoaki, Tokyo 161-8525 (JP); Kitahara, Yoshitaka, Tokyo 161-8525 (JP)
(74) Representative: Teipel, Stephan

(56) References cited:
- EP-A- 1 046 931
- EP-A- 1 319 966
- EP-A- 1 326 095
- EP-A- 1 348 726
- EP-A- 1 369 709

## Description

### [Technical Field]

The present invention relates to a process of producing a plastic lens having a high refractive index, a high Abbe's number and a high mechanical strength, which is suitably used for spectacle plastic lenses and to a plastic lens obtained by that process.

### [Background Art]

In the market of plastic lenses, especially in the market of spectacle plastic lenses, plastic lenses having a high refractive index and a high Abbe's number are demanded. An advantage of high-refractive index plastic lenses resides in the matter that it is possible to prepare a lens even having a strong refractive power such that its central thickness or surrounding thickness is thin. Also, in recent years, two-point spectacles free from a lens frame are popular. In the case where a two-point spectacle is fabricated using high-refractive index plastic lenses, high-refractive index plastic lenses not only having a thin central thickness or surrounding thickness as compared with low-refractive index plastic lenses but also having a more improved mechanical strength and the like are demanded.
As examples of such a high-refractive index plastic lens, a plastic lens having a refractive index of about 1.70 and constituted of a polyisocyanate compound, a polythiol compound and an epithio group-containing compound is disclosed in Patent Document 1. Also, a plastic lens obtained by polymerizing and curing an optical material composition containing a mixture of a sulfur-containing compound and an inorganic compound containing a sulfur atom and/or a selenium atom is disclosed in Patent Documents 2 and 3. Further similar relevant prior art is disclosed in EP-A-1319966 and EP-A-1326095
However, though the plastic lens disclosed in Patent Document 1 attains characteristics such as high refractive index, high Abbe's number, and good mechanical strength, it is demanded to provide a plastic lens having a further good mechanical strength. Also, according to the process of producing a lens disclosed in Patent Documents 2 and 3, the resulting lens is insufficient in transparency and is liable to causing yellowing. Also, a plastic lens having a further good mechanical strength is demanded.

[Patent Document 1] JP-A-2001-330701
[Patent Document 2] JP-A-2001-2783
[Patent Document 3] JP-A-2001-2933

### [Disclosure of the Invention]

### [Problems that the Invention is to Solve]

For the sake of solving the foregoing problems, the invention has been made, and its object is to provide a process of producing a plastic lens having a high refractive index, a high Abbe's number and a further good mechanical strength and a plastic lens obtained by that process.

### [Means for Solving the Problems]

In order to achieve the foregoing object, the present inventors made a variety of investigations. As a result, it has been found that the foregoing problems can be solved by the following prepolymerization measure. Specifically, the invention provides a process of producing a plastic lens comprising a step of polymerizing lens raw materials as a mixture comprising (1) a prepolymer obtainable by mixing sulfur of 0.1 % by weight to 10 % by weight based on the whole amount of the lens raw materials and an epithio group-containing compound and by reacting the sulfur and the epithio group-containing compound, using a vulcanization accelerator (2) a polyisocyanate compound, and (3) a polythiol compound; and a plastic lens obtainable by this production process.

### [Advantage of the Invention]

According to the production process of the invention, a plastic lens having a high refractive index, a high Abbe's number and a high mechanical strength is obtained.

### [Best Mode for Carrying Out the Invention]

The process of producing a plastic lens comprising a step of polymerizing lens raw materials as a mixture comprising (1) a prepolymer obtainable by mixing sulfur of 0.1 % by weight to 10 % by weight based on the whole amount of the lens raw materials and an epithio group-containing compound and by reacting the sulfur and the epithio group-containing compound, using a vulcanization accelerator (2) a polyisocyanate compound, and (3) a polythiol compound.

In the invention, as the step of producing the prepolymer (1), a mixed solution obtained by mixing and dissolving sulfur in an epithio group-containing compound is subjected to reaction of the epithio group-containing compound and sulfur at a non-limitative reaction temperature but preferably at a temperature in the range of from 30 to 80 °C, to obtain a prepolymer.
In the reaction, a proper amount of a vulcanization accelerator such as imidazole based vulcanization accelerators, for example, 2-mercapto-N-methylimidazole, imidazole, N-methylimidazole, 2-methylimidazole, 4-methylimidazole, N-ethylimidazole, 2-ethylimidazole, 4-ethylimidazole, N-butylimidazole, 2-butylimidazole, 4-butylimidazole, N-phenylimidazole, 2-phenylimidazole, N-benzylimidazole, 2-benzylimidzole, 2-mercaptoimidazole, and 2-mercaptobenzimidazole; thiuram based vulcanization accelerators, for example, tetramethylthiuram disulfide and tetramethylthiuram monosulfide; and guanizine based vulcanization accelerators, for example, diphenylguanizine and di-o-tolylguanizine, may be used.

The prepolymerization reaction of the epithio group-containing compound and sulfur may be carried out in any a nitrogen atmosphere, a vacuum atmosphere, or an atmospheric environment. It is preferred from the viewpoint of obtaining a lens having very excellent colorless transparency to carry out the reaction with stirring at a temperature in the range of from 30 to 80 °C for one hour to 24 hours.
The stop point of the prepolymerization reaction cannot be unequivocally defined because the transparency of an ultimately obtained lens varies depending upon the kinds and amounts of a polyisocyanate compound and a polythiol compound to be added later. However, as a method of determining the stop point of the prepolymerization reaction, for example, prepolymerization reaction is carried out with the raw materials of the epithio group-containing compound and sulfur, and prepolymers are taken out at a plurality of points during that step such that the refractive index of the prepolymer differs stepwise. A refractive index of a prepolymer can be defined as the stop point under the following a condition. The condition of defining as stop point is that "When each prepolymer is cooled to the vicinity of room temperature, sulfur is not again deposited, and transparency is obtained in the ultimate lens obtained by adding a polyisocyanate compound, a polythiol compound, and the like."

In this way, it is desired that at the time when the refractive index of the prepolymer rises to the stop point, heating is finished, and the prepolymer is rapidly cooled to the vicinity of room temperature. In that case, for the sake of sufficiently stopping the reaction, the reaction may be stopped by the addition of a proper amount of a reaction stopping auxiliary such as acidic phosphoric acid esters and dimethyltin dichloride at the time of completion.
The viscosity of the prepolymer at the stop point cannot be unequivocally defined because it varies depending upon the addition concentrations of the epithio group-containing compound and sulfur to be used. However, it is preferable that the viscosity of the prepolymer is not more than 1 Pa·s (at 25 °C) because a mixing operation with the lens raw materials to be added later is easy.

In the invention, from the viewpoint of obtaining a lens having especially good transparency, the content of sulfur to be used as the raw material of the prepolymer (1) is from 0.1 % by weight to 10 % by weight, preferably from 0.3 % by weight to 6 % by weight, and especially preferably from 0.3 % by weight to 5 % by weight based on the whole amount of the lens raw materials.
Also, from the viewpoint of making coloration of the resulting plastic lens small, the foregoing sulfur is preferably sulfur from which impurities having a boiling point of not higher than 120 °C are eliminated and which has a purity of 98 % by weight or more.
A method of eliminating impurities having a boiling point of not higher than 120 °C is not particularly limited. However, examples thereof include a method of heating sulfur at atmospheric pressure or in vacuo to eliminate impurities, a method of sublimating sulfur to undergo recrystallization, and a method of heating and melting sulfur to undergo recrystallization.

In the invention, the epithio group-containing compound used above in (1) may be called an episulfide based monomer. Specific examples of this monomer include alicyclic skeleton-containing episulfide compounds, for example, 1,3-and 1,4-bis(β-epithiopropylthio)cyclohexanes, 1,3- and 1,4-bis(β-epithiopropylthiomethyl) cyclohexanes, bis-[4-(β-epithiopropylthio) cyclohexyl]methane, 2,2-bis-[4-(β-epithiopropylthio) cyclohexyl] propane, bis[4-β-epithiopropylthio)cyclohexyl]sulfide, and 1,3- and 1,4-bis-(β-epithiopropyl)cyclohexanes; aromatic skeleton-containing episulfide compounds, for example, 1,3- and 1,4-bis-(β-epithiopropylthio) benzenes, 1,3- and 1,4-bis(β-epithiopropylthiomethyl)benzenes, bis[4-(β-epithiopropylthio)-phenyl]methane, 2,2-bis[4-(β-epithiopropylthio)phenyl]-propane, bis[4-(β-epithiopropylthio)phenyl]sulfide, bis-[4-(β-epithiopropylthio)phenyl]sulfide, 4,4-bis(β-epithiopropylthio)biphenyl, and 1,3- and 1,4-bis (β-epithiopropyl)benzenes; dithiane ring skeleton-containing episulfide compounds, for example, 2,5-bis (β-epithiopropylthiomethyl)-1,4-dithiane, 2,5-bis (β-epithiopropylthioethylthiomethyl)-1,4-dithiane, 2,5-bis(β-epithiopropylthioethyl) -1,4, -dithiane, 2, 3, 5-tri (β-epithiopropylthioethyl)-1,4-dithiane, and 2,5-bis(β-epithiopropyl)-1,4-dithiane; and aliphatic skeleton-containing episulfide compounds, for example, 2-(2-β-pylthioethylthio)-1,3-bis(β-epithiopropylthio)propane, 1,2-bis[(2-β-epithiopropylthioethyl)thio]-3-(β-epithiopropylthio)propane, tetrakis(β-epithiopropylthiomethyl)methane, 1,1,1-tris(β-epithiopropylthiomethyl)propane, bis-(β-epithiopropyl)sulfide, bis (β-epithiopropyl) disulfide, bis(β-epithiopropyl) ether, bis(β-epithiopropyl)methane, 1,2-bis(β-epithiopropyl)ethane, and 1,3-bis (β-epithiopropyl)propane.

Of these epithio group-containing compounds, bis (β-epithiopropyl) sulfide, bis (β-epithiopropyl) disulfide, bis (β-epithiopropyl) ether, bis (β-epithiopropyl) methane, 1,2-bis (β-epithiopropyl) ethane, 1,3-bis (β-epithiopropyl) - propane, 2,5-bis(β-epithiopropyl)-1,4-dithiane, 1,3- and 1,4-bis(β-epithiopropyl)cyclohexanes, 1,3- and 1,4-bis-(β-epithiopropyl) benzenes, bis [4-(β-epithiopropylthio) - phenyl]sulfide, and bis[4-(β-epithiopropylthio)cyclohexyl]sulfide are preferable. For an application to high refractive index lenses, bis (β-epithiopropyl)sulfide, bis (β-epithiopropyl)disulfide, and 2,5-bis(β-epithiopropyl)-1,4-dithiane are especially preferable as the epithio group-containing compound.
Incidentally, these epithio group-containing compounds may be used singly or in admixture.

In the invention, the total sum of the polyisocyanate compound (2) and the polythiol compound (3) is preferably from 3 % by weight to 50 % by weight, especially preferably from 10 % by weight to 40 % by weight, and most preferably from 20 % by weight to 40 % by weight based on the whole amount of the lens raw materials described above in (1) to (3) from the viewpoint of obtaining a plastic lens having good mechanical characteristic and high refractive index.
Also, a proportion of the polyisocyanate compound (2) to the polythiol compound (3) is preferably in the range of 1.0 or more, especially preferably from 1.0 to 5.0, and most preferably from 1.1 to 2.0 in terms of a molar ratio of -SH group/-NCO group from the viewpoint of obtaining a colorless plastic lens having good mechanical characteristic and high transparency. Such a mixing proportion does not coincide with the description of the foregoing Patent Document 1 filed by the same applicant. But, it is considered that the reason resides in the matter that the content of sulfur to be added to the epithio group-containing compound is defined to be from 0.1 % by weight to 10 % by weight based on the whole amount of the lens raw materials.

In the invention, the polyisocyanate compound (2) and the polythiol compound (3) is added without being subjected to prepolymerization in advance. It is considered that even when these compounds are not subjected to prepolymerization, by defining the content of sulfur to be added to the epithio group-containing compound to be from 0.1 % by weight to 10 % by weight based on the whole amount of the lens raw materials and synthesizing a prepolymer of the epithio group-containing compound and sulfur, the sulfur is reacted, whereby sulfur as a cause for opacity can be consumed. Also, for the sake of making the refractive index of the resulting plastic lens high as far as possible, it is preferred to add sulfur in an amount as large as possible. However, in the invention, by defining the content of sulfur to be not more than 10 % by weight based on the whole amount of the lens raw materials, even when the polyisocyanate compound and the polythiol compound are added without being subjected to prepolymerization, the resulting plastic lens does not cause cloudiness, the sulfur is not required to excessively react with the epithio compound, and the viscosity does not become high, and therefore, its handling is easy.
Thus, when the raw materials having been not subjected to prepolymerization are used, the viscosity is low, subsequent operations such as mixing operation, deaeration operation, defoaming step during and after pouring into a molding die are easy, and it is easy to introduce large amounts of the polyisocyanate compound and the polythiol compound.

Examples of the polyisocyanate compound (2) that is used in the invention include polyisocyanates containing at least one aromatic ring, such as xylylene diisocyanate, 3,3'-dichlorodiphenyl-4,4'-diisocyanate, 4,4'-diphenylmethane diisocyanate, 2,2',5,5'-tetrachlorodiphenyl-4,4'-diisocyanate, and tolylene diisocyanate; hexamethylene diisocyanate; 2,5-bis(isocyanatomethyl)-1,4-dithiane; bis-(isocyanatomethyl)sulfide; bis(isocyanatoethyl)sulfide; bis(isocyanatomethyl)disulfide; and bis(isocyanatoethyl)-disulfide. Also, polyisocyanates containing at least one alicyclic ring can be used. Specific examples thereof include bis(isocyanatomethyl)cyclohexane, bis(4-isocyanatocyclohexyl)methane, bis(4-isocyanatomethylcyclohexyl)methane, cyclohexane diisocyanate, isophorone diisocyanate, 2,5-bis(isocyanatomethyl)bicyclo[2.2.2]octane, 2,5-bis-(isocyanatomethyl)bicycle[2.2.1]heptane, 2-isocyanatomethyl-3-(3-isocyanatopropyl)-5-isocyanatomethyl-bicyclo-[2.2.1]-heptane, 2-isocyanatomethyl-3-(3-isocyanatopropyl)-6-isocyanatomethyl-bicyclo[2.2.1]heptane, 2-isocyanatomethyl-2-[3-isocyanatopropyl]-5-isocyanatomethyl-bicyclo[2.2.1]-heptane, 2-isocyanatomethyl-2-(3-isocyanatopropyl)-6-isocyanatomethyl-bicyclo[2.2.1]-heptane, 2-isocyanatomethyl-3-(3-isocyanatopropyl)-6-(2-isocyanatoethyl)-bicyclo[2.2.1]-heptane, 2-isocyanatomethyl-3-(3-isocyanatopropyl)-6-(2-isocyanatoethyl)-bicyclo[2.2.1]-heptane, 2-isocyanatomethyl-2-(3-isocyanatopropyl)-5-(2-isocyanatoethyl)-bicyclo[2.2.1]-heptane, 2-isocyanatomethyl-2-(3-isocyanatopropyl)-6-(2-isocyanatoethyl)-bicyclo-[2.2.1]-heptane, and dicyclohexylmethane diisocyanate.

Of these polyisocyanate compounds, bis(isocyanatomethyl)bicyclo[2.2.1]heptane, bis(isocyanatomethyl)cyclohexane, isophorone diisocyanate, dicyclohexylmethane diisocyanate, cyclohexane diisocyanate, and bis(isocyanatomethyl)-1,4-dithiane are preferable. Of these polyisocyanate compounds, for the sake of obtaining a lens having good refractive index and Abbe's number, it is preferred to use an alicyclic ring or aromatic ring-containing polyisocyanate compound.
These polyisocyanate compounds may be used singly or in admixture.

Examples of the polythiol compound (3) that is used in the invention include compounds containing or not containing a sulfur atom in addition to a mercapto group, such as methanedithiol, ethanedithiol, propanedithiol, 1,6-hexanedithiol, 1,2,3-trimercaptopropane, tetrakis(mercaptomethyl)methane, cyclohexanedithiol, 2,2-dimethylpropane-1,3-dithiol, 3,4-dimethoxybutane-1,2-dithiol, 2-methylcyclohexane-2,3-dithiol, bis(mercaptomethyl)cyclohexane, 2,3-dimercapto-1-propanol(2-mercaptoacetate), 2,3-dimercapto-1-propanol(3-mercaptoacetate), diethylene glycol bis(2-mercaptoacetate), diethylene glycol bis-(3-mercaptopropionate), 1,2-dimercaptopropylmethyl ether, 2,3-dimercaptopropylmethyl ether, 2,2-bis(mercaptomethyl)-1,3-propanedithiol, bis(2-mercaptoethyl) ether, ethylene glycol bis(2-mercaptoacetate), ethylene glycol bis(3-mercaptopropionate), trimethylolpropane tris-(2-mercaptoacetate), trimethylolpropane tris(3-mercaptopropionate), pentaerythritol tetrakis(2-mercaptoacetate), pentaerythritol tetrakis(3-mercaptopropionate), 1,2-bis-(2-mercaptoethylthio)-3-mercaptopropane, bis(mercaptomethyl)sulfide, bis(mercaptoethyl)sulfide, bis(mercaptopropyl)sulfide, bis(mercaptomethylthio)methane, bis-(2-mercaptoethylthio) methane, bis(3-mercaptopropyl)methane, 1,2-bis(mercaptomethylthio)ethane, 1,2-(2-mercaptoethylthio)ethane, 1,2-(3-mercaptopropyl)ethane, 1,3-bis-(mercaptomethylthio) propane, 1,3-bis(2-mercaptoethylthio)-propane, 1,3-bis(3-mercaptopropylthio)propane, 1,2-bis-(2-mercaptoethylthio)-3-mercaptopropane, 2-mercaptoethylthio-1,3-propanedithiol, 1,2,3-tris(mercaptomethylthio)propane, 1,2,3-tris(2-mercaptoethylthio)propane, 1,2,3-tris(3-mercaptopropylthio)propane, tetrakis-(mercaptomethylthiomethyl)methane, tetrakis(2-mercaptoethylthiomethyl)methane, tetrakis(3-mercaptopropylthiomethyl)methane, bis(mercaptomethyl)disulfide, bis-(mercaptoethyl)disulfide, bis(mercaptomethyl)-3,6,9-trithia-1,11-undecanedithiol, bis(1,3-dimercapto-2-propyl)-sulfide, 3,4-thiophenedithiol, tetrahydrothiophene-2,5-dimercaptomethyl, 2,5-dimercapto-1,3,4-thiadiazole, 2,5-dimercapto-1,4-dithiane, 2,5-bis(mercaptomethyl)-1,4-dithiane, and 2,5-bis(mercaptoethyl)-1,4-dithiane.

Of these polythiol compounds, bis-(mercaptomethyl)-1,4-dithiane, bis(mercaptoethyl)sulfide, bis(mercaptoethyl)disulfide, 1,2-bis(mercaptoethyl)-thio-3-mercaptopropane, pentaerythritol tetrakismercaptocatate, pentaerythritol tetrakismercaptopropionate, trimethylolpropane trismercaptoacaetate, trimethylolpropane trismercaptopropionate, and trimethylmercaptopropane are preferable.
Incidentally, these polythiol compounds may be used singly or in admixture.

In the invention, a variety of additives such as an ultraviolet light absorber, an infrared light absorber, a light stabilizer, an internal releasing agent, an antioxidant, a dye, a photochromic dye, a pigment, and an antistatic agent may be added to the mixture of the foregoing prepolymer (1), polyisocyanate compound (2) and polythiol compound (3), thereby imparting specific effects to the resin.
Also, a catalyst may be added for the purpose of reacting the foregoing prepolymer (1), polyisocyanate compound (2) and polythiol compound (3). Examples of the catalyst include amines, phosphines, quaternary ammonium salts, quaternary phosphonium salts, tertiary sulfonium salts, secondary iodonium salts, mineral acids, Lewis acids, organic acids, silicic acids, and tetrafluoroboric acids.
Of these catalysts, amines such as aminoethanol, 1-aminopropanol, 2-aminopropanol, aminobutanol, aminopentanol, and aminohexanol; and quaternary phosphonium salts such as tetramethylphosphonium chloride, tetramethylphosphonium bromide, tetraethylphosphonium chloride, tetraethylphosphonium bromide, tetra-n-butylphosphonium chloride, tetra-n-butylphosphonium bromide, tetra-n-butylphosphonium iodide, tetra-n-hexylphosphonium bromide, and tetra-n-octylphosphonium bromide are preferable.
Also, though it is required to select the catalyst to be used depending upon the kind of the monomer to be used and adjust its use amount, in general, the catalyst is preferably used in an amount in the range of from 0.001 % by weight to 0.1 % by weight based on the whole amount of the lens raw materials.

A method of mixing these raw materials (1) to (3) is not particularly limited. In mixing, with respect to the setting temperature, the required time, and the like, conditions under which the respective components are sufficiently mixed may be basically employed. From the viewpoints that undesired reactions among the respective raw materials and the additives are suppressed and that the viscosity is not increased beyond the necessity, thereby making the casting operating easy, the mixing is preferably carried out at a mixing temperature in the range of -30 °C to 50 °C, and more preferably from -5 °C to 30 °C. The mixing is preferably carried out for a mixing time in the range of from 5 minutes to 2 hours, and more preferably from about 5 minutes to 15 minutes.

Also, it is preferable from the standpoint of preventing the generation of foams during the subsequent cast polymerization and curing to carry out a degasification operation in vacuo before, during or after mixing of the respective raw materials and additives. At this time, the degasification operation is preferably carried out under a degree of vacuum in the range of from about 0.1 mmHg to 50 mmHg, and especially preferably from 1 mmHg to 20 mmHg.
Further, it is preferred from the standpoint of further enhancing the quality of the optical material of the invention to purify the mixture or the major and subsidiary raw materials before mixing by filtration with a filter having a pore size of from about 0.2 to 20 µm, etc.

The mixed raw materials and the like are poured into a glass or metal-made die and polymerized and cured in an electric furnace or the like. It is preferable that the curing temperature is from 5 °C to 120 °C and that the curing time is usually from 1 to 72 hours. Also, after completion of the curing, it is a preferred treatment for removing a deformation of the plastic lens of the invention to anneal the material at a temperature of from 50 to 150 °C for from about 10 minutes to 5 hours.
In the case where the plastic lens obtained by the production process of the invention is hardly separated from the die after the polymerization, a known external and/or internal releasing agent may be used or added, thereby enhancing release properties. Also, for the purpose of protecting the resin or eyes from ultraviolet light, a ultraviolet light absorber may be added, and for the purpose of protecting eyes from infrared light, an infrared light absorber may be added. The addition amount thereof may vary depending upon the absorption ability and maximum absorption wavelength of an additive to be used but is approximately from about 0.03 % by weight to 3 % by weight. Also, a method of impregnating the resin with such an absorber later may be employed.
Further, for the purpose of keeping or enhancing the appearance of the resin, the resin may be subjected to bluing by adding an antioxidant or using a trace amount of blue and red dyes or pigments.

The plastic lens obtained in the invention can be subjected to dyeing treatment using a dye. Also, for the sake of enhancing scratch resistance, a cured coating film may be formed on the plastic lens using a coating liquid containing an organosilicon compound or an acrylic compound and finely divided inorganic materials such as tin oxide, silicon oxide, zirconium oxide, and titanium oxide. Above all, a cured coating film using an organosilicon compound is preferable because a further excellent effect is obtained.
Also, for the sake of enhancing the impact resistance, a primer layer containing a polyurethane as the major component may be formed between the plastic lens and the foregoing cured coating film.
Further, for the sake of imparting an antireflection performance, an antireflection film made of an inorganic substance such as silicon oxide, titanium dioxide, zirconium oxide, and tantalum oxide may be formed on the foregoing cured coating film. Also, for the sake of enhancing water repellency, a water repellent film made of a fluorine atom-containing organosilicon compound may be formed on the foregoing antireflection film.

The thus obtained plastic lens of the invention preferably has a refractive index of from 1.69 to 1.72.
Also, the plastic lens of the invention preferably has an Abbe's number of 32 or more, and more preferably 35 or more.
Further, the resulting plastic lens is less in coloration, high in transparency and high in mechanical strength.

Also, in addition to the plastic lens obtainable by the foregoing method, the invention includes a plastic lens having transparency, which is comprised of a prepolymer obtained by reacting a polyisocyanate compound, a polythiol compound, an epithio group-containing compound, and sulfur. What the plastic lens has transparency means that the plastic lens has the same or substantially the same transparency as compared with the case of producing lenses having the same thickness without using sulfur but using the similar raw materials.
In the invention, the transparency of the plastic lens is defined as a transmission coefficient, τ = φₑₓ/φᵢₙ, wherein φₑₓ represents an intensity of light having transmitted through the lens upon exposure with visible light (wavelength: from 400 to 750 nm) , and φᵢₙ represents an intensity of visible light incident into the lens.
In the case where an antireflection film is not coated, the value of transparency of the lens relies upon the value of the refractive index of the lens. This is because a lens giving a high refractive index gives a high reflection value.
In the invention, when the plastic lens having a refractive index of from 1.55 to 1.65 is measured in a thickness of 1.8 mm using a wavelength of from 500 nm to 600 nm, it preferably has a transparency in the range of from 0.80 to 0.92, more preferably from 0.85 to 0.92, and especially preferably from 0.88 to 0.92.
Also, when the plastic lens having a refractive index of from 1.66 to 1.72 is measured in a thickness of 1.8 mm using a wavelength of from 500 nm to 600 nm, it preferably has a transparency in the range of from 0.80 to 0.91, more preferably from 0.85 to 0.91, and especially preferably from 0.88 to 0.92.

### [Examples]

The invention will be described below in more detail with reference to the following Examples, but it should not be construed that the invention is limited to these Examples. Incidentally, physical properties of plastics lenses obtained in the Examples and Comparative Examples were evaluated in the following manners.

### (1) Refractive index and Abbe's number:

The measurement was carried out at 20 °C using a precision refractometer KPR-200 Model, manufactured by Kalnew Optical Industrial Co., Ltd. In Table 1, nd is a refractive index at 587.6 nm; ne is a refractive index at 546.1 nm; an Abbe' s number vd is a value of (nd - 1)/(nF - nC); and an Abbe's number ve is a value of (ne - 1)/(nF' - nC') , wherein nC is a refractive index at 656.3 nm; nF is a refractive index at 486.1 nm; nC' is a refractive index at 643. 9 nm; and nF' is a refractive index at 480.0 nm.

### (2) Heat resistance:

The measurement was carried out using a thermal analyzer TAS-100, TMA8140, manufactured by Regaku Corporation by the penetration method (sample thickness: 3 mm, pin diameter: 0.5 mm, load 10 g, temperature-rising rate: 10 °C/min), and a temperature of a peak value at which thermal expansion changed was measured. In Table 1, this is designated as Tg.

### (3) Tensile strength:

A lens adjusted so as to have 0.00 D, a lens diameter of 80 mm and a thickness of 1.8 mm was processed into one for lens frame and bored holes having a diameter of 1.6 mm at two positions using a drill on the assumption of two-point spectacle frame processing, to prepare a sample. A shaft having a diameter of 1.6 mm was penetrated into each of the holes, the both ends of the sample were fixed and drawn at a rate of 5 mm/min using a tensilon universal testing machine (model: RTC-1225A), manufactured by A&D Company, Ltd., and a strength at the time of causing breakage was measured.

### (4) Transparency:

The appearance of the produced plastic lens was visually observed.

### Example 1:

### (a) Production of prepolymer (whole amount of prepolymer: 211.6 parts by weight):

In a flask, 200 parts by weight of bis (B-epithiopropyl) sulfide as an epithio group-containing compound and 10 parts by weight of sulfur (manufactured by Wako Pure Chemical Industries, Ltd., flower of sulfur, purity: 99 % by weight) were charged based on the whole amount of the raw materials, and the mixture was heated for dissolution at 55 °C. 1.6 parts by weight of methimazole (2-mercapto-N-methylimidazole) as a vulcanization accelerator was added to the solution, and the mixture was allowed to react for 5 hours, followed by cooling to 25 °C to produce a prepolymer. The resulting prepolymer had a refractive index (nd) of 1.623 (at 60 °C).

### (b) Production of plastic lens:

10.71 parts by weight of bis(isocyanatomethyl)bicyclo[2.2.1]heptane as a polyisocyanate compound was weighed and charged in a flask, to which were then added 0.35 parts by weight of SEESORB 707, manufactured by Shipro Kasei Kaisha, Ltd. as a ultraviolet light absorber, 0.004 parts by weight of an acidic phosphoric acid ester (JP-506H, manufactured by Johoku Chemical Co., Ltd.) as an internal releasing agent, 0.04 parts by weight of tetrabutylphosphonium bromide as a curing catalyst, and 200 ppb, based on the whole amount of the raw materials, a blend of a trade name, Diaresin Blue G (manufactured by Mitsubishi Chemical Corporation) and a trade name, Diaresin Red HS (manufactured by Mitsubishi Chemical Corporation) as a bluing agent in a weight proportion of blue to red of 7/3, and the mixture was stirred and dissolved.

After dissolution, 19.29 parts by weight of bis-(mercaptomethyl)-1,4-dithiane as a polythiol compound was added, and the mixture was stirred such that it became uniform. Thereafter, 70 parts by weight of the prepolymer produced above in (a) was added, and the mixture was further stirred. When the mixture became substantially uniform, the resulting mixture was subjected to degasification in vacuo of 4,000 Pa while stirring for 10 minutes and filtered by a Teflon filter having a pore size of 1 µm (Teflon is a trade mark), and the filtrate was poured into a molding die composed of a glass mold and a gasket.

This poured molding die was subjected to temperature rising step by step from 20 °C to 100 °C over 22 hours and held at 100 °C for one hour, thereby performing polymerization. With respect to the polymerization posture, a posture in which the lens convex is positioned upward, and the molding die is inclined at about 15° against the horizontal plane, thereby sending air bubbles having incorporated at the time of pouring way into the edge may be employed. Also, taking into account polymerization striae, the polymerization may be carried out in the horizontal posture. After completion of the polymerization, the resin was gradually cooled and then taken out from the die. For the sake of reducing the deformation formed in the resulting resin and stabilizing the power of lens, the resin was annealed such that after heating at 105 °C for one hour, the temperature was gradually cooled from the glass transition temperature to 20 °C. There was thus obtained a plastic lens.

With respect to the thus obtained plastic lens, the foregoing physical properties (1) to (4) were measured and evaluated, the results of which are shown in Table 1.

As shown in Table 1, the resulting plastic lens was a lens having high transparency and having excellent refractive index, Abbe's number, heat resistance and mechanical strength.

### Examples 2 to 13:

Plastic lenses were produced in the same manner as in Example 1 under the conditions of the respective raw materials and amounts shown in Table 1, except for the matter of addition or non-addition of the bluing agent. Then, the foregoing physical properties (1) to (4) were measured and evaluated, the results of which are shown in Table 1. Likewise the lens obtained in Example 1, the resulting lenses were a lens having high transparency and having excellent refractive index, Abbe's number, heat resistance and mechanical strength.

### Example 14:

### (c) Production of prepolymer (whole amount of prepolymer: 211.6 parts by weight):

In a flask, 160 parts by weight of bis (β-epithiopropyl)sulfide and 40 parts by weight of bis-(β-epithiopropyl)disulfide as epithio group-containing compounds and 10 parts by weight of sulfur (manufactured by Wako Pure Chemical Industries, Ltd. , flower of sulfur, purity: 99 % by weight) were charged based on the whole amount of the raw materials, and the mixture was heated for dissolution at 55 °C. 1.6 parts by weight of methimazole (2-mercapto-N-methylimidazole) as a vulcanization accelerator was added to the solution, and the mixture was allowed to react for 5 hours, followed by cooling to 25 °C to produce a prepolymer. The resulting prepolymer had a refractive index (nd) of 1.634 (at 60 °C).

With respect to the production step of a plastic lens, a plastic lens was produced in the same manner as in Example 1, except for using 70 parts by weight of the prepolymer prepared above in (c) under the conditions of the respective raw materials and amounts shown in Table 1 and changing the addition amount of the bluing agent to 600 ppb.

### Comparative Example 1:

An epithio group-containing compound and sulfur were dissolved, but prepolymerization did not occur. A polyisocyanate compound and a polythiol compound were added to this mixed solution to produce a plastic lens. That is, the plastic lens was produced in the following manner.

In a flask, 66.16 parts by weight of bis (β-epithiopropyl)sulfide and 3.31 parts by weight of sulfur (manufactured by Wako Pure Chemical Industries, Ltd., flower of sulfur, purity: 99 % by weight) were charged based on the whole amount of the raw materials, and the mixture was heated for dissolution at 55 °C for from about 15 to 30 minutes. Immediately thereafter, 0.53 parts by weight of methimazole was added and dissolved, and immediately thereafter, the mixture was cooled to 25 °C. This is designated as "solution 1".

10.71 parts by weight of bis(isocyanatomethyl)bicyclo[2.2.1] heptane as a polyisocyanate compound, 0.35 parts by weight of SEESORB 707, manufactured by Shipro Kasei Kaisha, Ltd. as a ultraviolet light absorber, 0.004 parts by weight of an acidic phosphoric acid ester (JP-506H, manufactured by Johoku Chemical Co., Ltd.) as an internal releasing agent, and 0.04 parts by weight of tetrabutylphosphonium bromide as a curing catalyst were added, and the mixture was stirred and dissolved.

After dissolution, 19.29 parts by weight of bis-(mercaptomethyl)-1,4-dithiane as a polythiol compound was added, and the mixture was further uniformly dissolved. Next, 70 parts by weight of the solution 1 was added, and the mixture was substantially uniformly mixed. The resulting mixture was subjected to degasification in vacuo of 4,000 Pa while stirring for 10 minutes and filtered by a Teflon filter having a pore size of 1 µm (Teflon is a trade mark), and the filtrate was poured into a molding die composed of a glass mold and a gasket.

This poured molding die was subjected to temperature rising step by step from 25 °C to 100 °C over 22 hours and held at 100 °C for one hour, thereby performing polymerization. After completion of the polymerization, the resin was gradually cooled and then taken out from the die. The resulting resin was cloudy and failed in transparency. The results are shown in Table 1.

### Comparative Example 2:

The same procedures as in Comparative Example 1 were followed, except that the amount of bis(isocyanatomethyl)bicyclo[2.2.1]heptane was changed to 13.12 parts by weight and that the amount of bis(mercaptomethyl)-1,4-dithiane was changed to 16.88 parts by weight. The resulting resin was cloudy and failed in transparency. The results are shown in Table 1.

### Comparative Example 3:

A plastic lens was produced without using sulfur and a polyisocyanate compound. That is, the plastic lens was produced in the following manner.

In a flask, 95 parts by weight of bis (β-epithiopropyl)sulfide as an epithio group-containg compound, 0.35 parts by weight of SEESORB 707, manufactured by Shipro Kasei Kaisha, Ltd. as a ultraviolet light absorber, and 0.04 parts by weight of tetrabutylphosphonium bromide as a curing catalyst were added, and the mixture was stirred and dissolved.

After dissolution, 5.00 parts by weight of bis (mercaptomethyl)-1,4-dithiane as a polythiol compound was added, and the mixture was substantially uniformly mixed. The resulting mixture was subjected to degasification in vacuo of 4,000 Pa while stirring for 10 minutes and filtered by a Teflon filter having a pore size of 1 µm (Teflon is a trade mark), and the filtrate was poured into a molding die composed of a glass mold and a gasket.

This poured molding die was subjected to temperature rising step by step from 25 °C to 100 °C over 22 hours and held at 100 °C for one hour, thereby performing polymerization. After completion of the polymerization, the resin was gradually cooled and then taken out from the die.

The resulting resin was colorless and transparent and excellent in optical characteristics, the tensile strength of which was, however, low as 28 kgf.

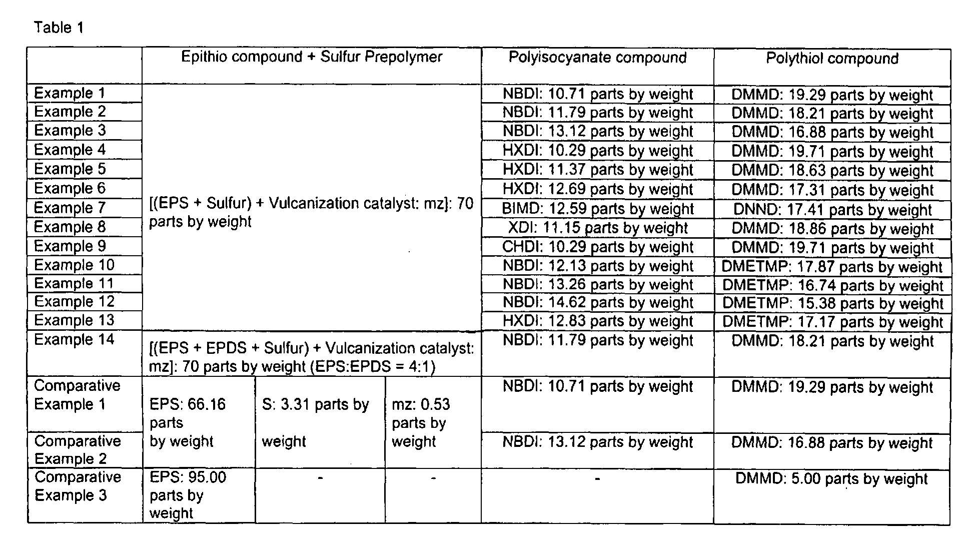

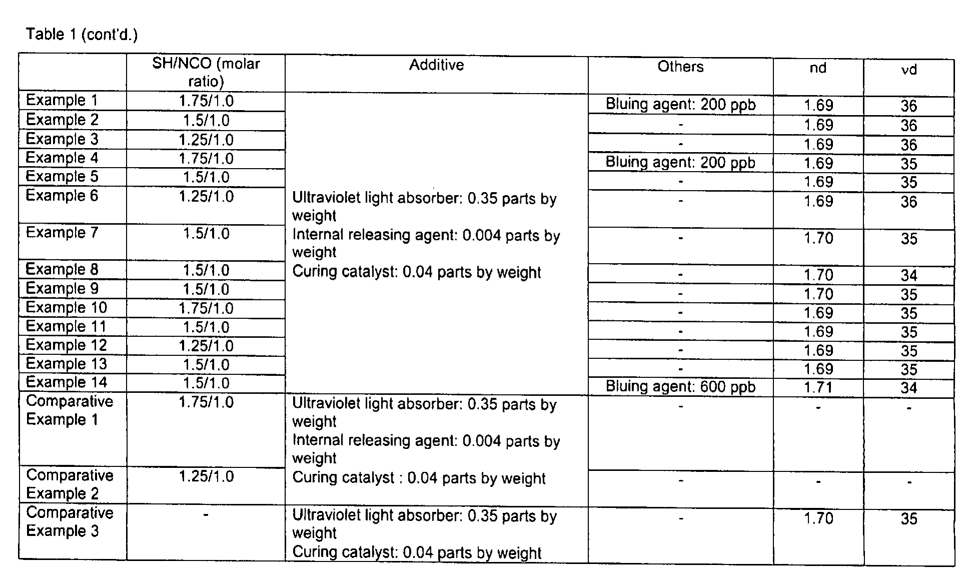

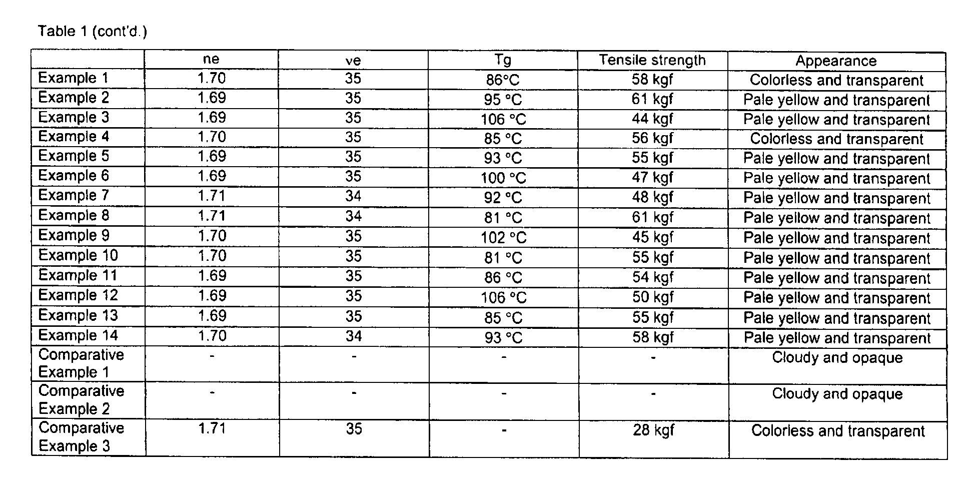

EPS: Bis(β-epithiopropyl)sulfide
EPDS: Bis(β-epithiopropyl)disulfide
mz: 2-Mercapto-N-methylimidazole
NBDI: Bis(isocyanatomethyl)bicyclo[2.2.1]heptane
HXDI: Bis(isocyanatomethyl)cyclohexane
BIMD: Bis(isocyanatomethyl)-1,4-dithiane
CHDI: Cyclohexane diisocyanate
XDI: m-Xylylene diisocyanate
DMMD: Bis(mercaptomethyl)-1,4-dithiane
DMETMP: 1,2-Bis(mercaptoethylthio)-3-mercaptopropane
[Industrial Applicability]

According to the production process of the invention, a plastic lens having a high refractive index, a high Abbe's number and a high mechanical strength is obtained. Also, the obtained plastic lens is suitable for spectacle plastic lenses.

## Claims

1. A process of producing a plastic lens comprising a step of polymerizing lens raw materials as a mixture comprising (1) a prepolymer obtainable by mixing sulfur of 0.1 % by weight to 10 % by weight based on the whole amount of the lens raw materials and an epithio group-containing compound and by reacting the sulfur and the epithio group-containing compound, using a vulcanization accelerator (2) a polyisocyanate compound, and (3) a polythiol compound.

2. The process of producing a plastic lens according to claim 1, wherein a proportion of the polyisocyanate compound to the polythiol compound is 1.0 or more in terms of a molar ratio of -SH group/-NCO group.

3. The process of producing a plastic lens according to claim 1 or 2, wherein the total sum of the polyisocyanate compound and the polythiol compound is from 3 % by weight to 50 % by weight based on the whole amount of the lens raw materials of (1) to (3).

4. The process of producing a plastic lens according to any one of claims 1 to 3, wherein the polyisocyanate compound is an alicyclic ring or aromatic ring-containing compound.

5. The process of producing a plastic lens according to any one of claims 1 to 4, wherein the polyisocyanate compound is at least member selected from bis(isocyanatomethyl)-bicyclo[2.2.1]heptane, bis(isocyanatomethyl)cyclohexane, isophorone diisocyanate, dicyclohexylmethane diisocyanate, cyclohexane diisocyanate, xylylene diisocyanate, and bis(isocyanatomethyl)-1,4-dithiane.

6. The process of producing a plastic lens according to any one of claims 1 to 5, wherein the epithio group-containing compound is at least one member selected from bis (β-epithiopropyl)sulfide, bis(β-epithiopropyl)disulfide, bis (β-epithiopropyl) ether, bis (β-epithiopropyl)methane, 1,2-bis (β-epithiopropyl)ethane, 1,3-bis(β-epithiopropyl)propane, 2,5-bis(β-epithiopropyl)-1,4-dithiane, 1,3- and 1,4-bis (β-epithiopropyl)cyclohexanes, 1,3- and 1,4-bis-(β-epithiopropyl)benzenes, bis[4-(β-epithiopropylthio)phenyl]-sulfide, and [4-(β-epithiopropylthio)cyclohexyl]sulfide.

7. The process of producing a plastic lens according to any one of claims 1 to 6, wherein the polythiol compound is at least one member selected from bis(mercaptomethyl)-1,4-dithiane, bis(mercaptoethyl)sulfide, bis(mercaptoethyl)disulfide, 1,2-bis(mercaptoethyl)thio-3-mercaptopropane, pentaerythritol tetrakismercaptoacetate, pentaerythritol tetrakismercaptopropionate, trimethylolpropane trismercaptoacetate, trimethylolpropane trismercaptopropionate, and trimethylmercaptopropane.

8. The process of producing a plastic lens according to any one of claims 1 to 7, wherein the sulfur is one from which impurities having a boiling point of not higher than 120 °C are eliminated and which has a purity of 98 % by weight or more.

9. The process of producing a plastic lens according to any one of claims 1 to 8, wherein the plastic lens has a refractive index of from 1.69 to 1.72.

10. The process of producing a plastic lens according to any one of claims 1 to 9, further comprising a step of forming a cured coating film on the plastic lens.

11. The process of producing a plastic lens according to claim 10, wherein a raw material of the cured coating film is an organosilicon compound.

12. The process of producing a plastic lens according to claim 11, further comprising a step of forming a primer layer between the plastic lens and the cured coating film.

13. The process of producing a plastic lens according to any one of claims 10 to 12, further comprising a step of forming an antireflection film made of an inorganic substance on the cured coating film.

14. The process of producing a plastic lens according to claim 13, further comprising including a step of forming a water repellent film made of a fluorine atom-containing organosilicon compound on the antireflection film.

15. A plastic lens obtainable by the process according to any one of claims 1 to 14.

## Patentansprüche

1. Verfahren zur Herstellung einer Kunststofflinse, umfassend einen Schritt des Polymerisierens von Linsenrohmaterialien als ein Gemisch, umfassend (1) ein Vorpolymer, das durch Mischen von 0,1 Gew.-% bis 10 Gew.-%, basierend auf der Gesamtmenge der Linsenrohmaterialien, Schwefel und einer Epithiogruppen-enthaltenden Verbindung und durch Umsetzen des Schwefels und der Epithiogruppen-enthaltenden Verbindung unter Verwendung eines Vulkanisationsbeschleunigers erhältlich ist, (2) eine Polyisocyanatverbindung und (3) eine Polythiolverbindung.

2. Verfahren zur Herstellung einer Kunststofflinse nach Anspruch 1, wobei das Verhältnis der Polyisocyanatverbindung zu der Polythiolverbindung hinsichtlich des Molverhältnisses von -SH-Gruppe/-NCO-Gruppe 1,0 oder mehr beträgt.

3. Verfahren zur Herstellung einer Kunststofflinse nach Anspruch 1 oder 2, wobei die Gesamtmenge der Polyisocyanatverbindung und der Polythiolverbindung 3 Gew.-% bis 50 Gew.-%, basierend auf der Gesamtmenge der Linsenrohmaterialien von (1) bis (3), beträgt.

4. Verfahren zur Herstellung einer Kunststofflinse nach einem der Ansprüche 1 bis 3, wobei die Polyisocyanatverbindung eine Verbindung ist, die einen alicyclischen Ring oder aromatischen Ring enthält.

5. Verfahren zur Herstellung einer Kunststofflinse nach einem der Ansprüche 1 bis 4, wobei die Polyisocyanatverbindung mindestens ein Mitglied, ausgewählt aus Bis(isocyanatomethyl)-bicyclo[2.2.1]heptan, Bis(isocyanatomethyl)cyclohexan, Isophorondiisocyanat, Dicyclohexylmethandiisocyanat, Cyclohexandiisocyanat, Xylylendiisocyanat und Bis(isocyanatomethyl)-1,4-dithian, ist.

6. Verfahren zur Herstellung einer Kunststofflinse nach einem der Ansprüche 1 bis 5, wobei die Epithiogruppen-enthaltende Verbindung mindestens ein Mitglied, ausgewählt aus Bis(β-epithiopropyl)sulfid, Bis(β-epithiopropyl)disulfid, Bis(β-epithiopropyl)ether, Bis(β-epithiopropyl)methan, 1,2-Bis(β-epithiopropyl)ethan, 1,3-Bis(β-epithiopropyl)-propan, 2,5-Bis(β-epithiopropyl)-1,4-dithian, 1,3- und 1,4-Bis(β-epithiopropyl)cyclohexanen, 1,3- und 1,4-Bis-(β-epithiopropyl)benzolen, Bis[4-(β-epithiopropylthio)-phenyl]sulfid und [4-(β-Epithiopro-pylthio)cyclohexyl]-sulfid, ist.

7. Verfahren zur Herstellung einer Kunststofflinse nach einem der Ansprüche 1 bis 6, wobei die Polythiolverbindung mindestens ein Mitglied, ausgewählt aus Bis(mercaptomethyl)-1,4-dithian, Bis(mercaptoethyl)sulfid, Bis(mercaptoethyl)disulfid, 1,2-Bis(mercaptoethyl)-thio-3-mercaptopropan, Pentaerythritoltetrakismercaptoacetat, Pentaerythritoltetrakismercaptopropionat, Trimethylolpropantrismercaptoacetat, Trimethylolpropantrismercaptopropionat und Trimethylmercaptopropan, ist.

8. Verfahren zur Herstellung einer Kunststofflinse nach einem der Ansprüche 1 bis 7, wobei aus dem Schwefel Verunreinigungen mit einem Siedepunkt von nicht mehr als 120 °C eliminiert werden und er eine Reinheit von 98 Gew.-% oder mehr hat.

9. Verfahren zur Herstellung einer Kunststofflinse nach einem der Ansprüche 1 bis 8, wobei die Kunststofflinse einen Brechungsindex von 1,69 bis 1,72 hat.

10. Verfahren zur Herstellung einer Kunststofflinse nach einem der Ansprüche 1 bis 9, ferner umfassend einen Schritt des Bildens eines gehärteten Beschichtungsfilms auf der Kunststofflinse.

11. Verfahren zur Herstellung einer Kunststofflinse nach Anspruch 10, wobei das Rohmaterial des gehärteten Beschichtungsfilms eine Organosiliciumverbindung ist.

12. Verfahren zur Herstellung einer Kunststofflinse nach Anspruch 11, ferner umfassend einen Schritt des Bildens einer Primerschicht zwischen der Kunststofflinse und dem gehärteten Beschichtungsfilm.

13. Verfahren zur Herstellung einer Kunststofflinse nach einem der Ansprüche 10 bis 12, ferner umfassend einen Schritt des Bildens eines Antireflexfilms aus einer anorganischen Substanz auf dem gehärteten Beschichtungsfilm.

14. Verfahren zur Herstellung einer Kunststofflinse nach Anspruch 13, ferner umfassend einen Schritt des Bildens eines wasserabweisenden Films aus einer Fluoratom-enthaltenden Organosiliciumverbindung auf dem Antireflexfilm.

15. Kunststofflinse, die durch das Verfahren nach einem der Ansprüche 1 bis 14 erhältlich ist.

## Revendications

1. Procédé de production d'une lentille de plastique comprenant une étape de polymérisation des matières premières de lentille sous forme de mélange comprenant (1) un prépolymère qu'on peut obtenir par mélange de soufre de 0,1% en poids à 10% en poids, sur base de la quantité totale des matières premières de lentille, et d'un composé contenant un groupe épithio et par réaction du soufre et du composé contenant le groupe épithio, à l'aide d'un accélérateur de vulcanisation, (2) un composé de polyisocyanate et (3) un composé de polythiol.

2. Procédé de production d'une lentille de plastique selon la revendication 1, dans lequel une proportion du composé de polyisocyanate par rapport au composé de polythiol est de 1,0 ou plus en termes de rapport molaire du groupe-SH/groupe-NCO.

3. Procédé de production d'une lentille de plastique selon la revendication 1 ou 2, dans lequel la somme totale du composé de polyisocyanate et du composé de polythiol va de 3% en poids à 50% en poids sur base de la quantité totale des matières premières de lentille de (1) à (3).

4. Procédé de production d'une lentille de plastique selon l'une quelconque des revendications 1 à 3, dans lequel le composé de polyisocyanate est un composé contenant un cycle alicyclique ou un cycle aromatique.

5. Procédé de production d'une lentille de plastique selon l'une quelconque des revendications 1 à 4, dans lequel le composé de polyisocyanate est au moins un élément sélectionné par les suivants:
bis(isocyanatométhyl)-bicyclo[2.2.1]heptane, bis(isocyanatométhyl)cyclohexane, isophorone diisocyanate, dicyclohexylméthane diisocyanate, cyclohexane diisocyanate, xylylène diisocyanate et bis(isocyanatométhyl)-1,4-dithiane.

6. Procédé de production d'une lentille de plastique selon l'une quelconque des revendications 1 à 5, dans lequel le composé contenant le groupe épithio est au moins un élément sélectionné parmi les suivants:
bis(β-épithiopropyl)sulfure, bis (β-épithiopropyl)disulfure, bis(β-épithiopropyl)éther, bis(ß-épithiopropyl)méthane, 1,2-bis(ß-épithiopropyl) - éthane, 1,3-bis(ß-épithiopropyl)propane, 2,5-bis(ß-épithiopropyl)-1,4-dithiane, 1,3- et 1,4-bis(ß-épithiopropyl)cyclohexanes, 1,3- et 1,4-bis(ß-épithiopropyl)benzènes, bis[4-(ß-épithiopropylthio)phényl]-sulfure et [4-(ß-épithiopropylthio)cyclohexyl]sulfure.

7. Procédé de production d'une lentille de plastique selon l'une quelconque des revendications 1 à 6, dans lequel le composé de polythiol est au moins un élément sélectionné parmi les suivants:
bis(mercaptométhyl)-1,4-dithiane, bis (mercaptoéthyl) sulfure, bis(mercaptoéthyl)disulfure, 1,2-bis(mercaptoéthyl)thio-3-mercaptopropane, pentaérythritol tétrakismercaptoacétate, pentaéerythritol tétrakismercaptopropionate, triméthylolpropane trismercaptoacétate, triméthylolpropane trismercaptopropionate et triméthylmercaptopropane.

8. Procédé de production d'une lentille de plastique selon l'une quelconque des revendications 1 à 7, dans lequel le soufre est un soufre duquel les impuretés présentant un point d'ébullition pas supérieur à 120°C sont éliminés et qui présente une pureté de 98% en poids ou plus.

9. Procédé de production d'une lentille de plastique selon l'une quelconque des revendications 1 à 8, dans lequel la lentille de plastique a un indice de réfraction allant de 1,69 à 1,72.

10. Procédé de production d'une lentille de plastique selon l'une quelconque des revendications 1 à 9, comprenant en outre une étape de formation d'un film de revêtement durci sur la lentille de plastique.

11. Procédé de production d'une lentille de plastique selon la revendication 10, dans lequel une matière première du film de revêtement durci est un composé d'organosilicium.

12. Procédé de production d'une lentille de plastique selon la revendication 11, comprenant en outre une étape de formation d'une couche de primaire entre la lentille de plastique et le film de revêtement durci.

13. Procédé de production d'une lentille de plastique selon l'une quelconque des revendications 10 à 12, comprenant en outre une étape de formation d'un film antireflet constitué d'une substance inorganique sur le film de revêtement durci.

14. Procédé de production d'une lentille de plastique selon la revendication 13, comprenant en outre l'inclusion d'une étape de formation d'un film hydrophobe constitué d'un composé d'organosilicium contenant un atome de fluor sur le film antireflet.

15. Lentille de plastique qu'on peut obtenir par le procédé selon l'une quelconque des revendications 1 à 14.
